# EUROPÄISCHE PATENTANMELDUNG

(11) **EP 4 721 953 A1**
(43) Veröffentlichungstag der Anmeldung: **08.04.2026**
(21) Anmeldenummer: 25205307.9
(22) Anmeldetag: 29.09.2025
(51) Int. Cl.: B29C 51/26

(54) **VORRICHTUNG UND VERFAHREN ZUR ÜBERFÜHRUNG EINER MATERIALBAHN UND THERMOFORMANLAGE**

(30) Priorität: 02.10.2024 DE 102024128673
(71) Anmelder: KIEFEL GmbH, 83395 Freilassing (DE)
(72) Erfinder: Datscher, Aaron, 4563 Micheldorf (AT); Staudinger, Michael, 83413 Fridolfing (DE)
(74) Vertreter: DTS Patent- und Rechtsanwälte PartmbB

(57) **Zusammenfassung**

Es werden eine Vorrichtung zur Überführung einer Materialbahn in einer Thermoformanlage (100), eine Thermoformanlage mit einem Formwerkzeug und einer Vorrichtung zur Überführung einer Materialbahn (300) sowie ein Verfahren zum Überführen einer Materialbahn aus einem Formbereich einer Thermoformanlage aus einem Formbereich einer Thermoformanlage mit einem Formwerkzeug und mit einer Vorrichtung zur Überführung der Materialbahn beschrieben, wobei das Formwerkzeug während eines Umformprozesses um eine quer zur Vorschubrichtung der Materialbahn verlaufende Achse gekippt wird und wobei die Materialbahn aus einem Formbereich des Formwerkzeugs der Thermoformanlage zu einer nachgelagerten Station der Thermoformanlage transportiert wird, wobei die Materialbahn vom Formbereich bis zur nachgelagerten Station bewegt wird, wobei die Vorrichtung zur Überführung eine Transporteinheit mit einem Transportmittel aufweist, das zwischen Formstation und nachgelagerter Station in einer ersten Richtung verlagert und mit einem Anfangsbereich der Materialbahn in einem ersten der Formstation zugewandten Bereich in Eingriff gebracht wird und in einem zweiten der nachgelagerten Station zugewandten Bereich außer Eingriff gebracht wird.

Die Vorrichtung 200 zur Überführung einer Materialbahn bzw. einer Folie 300 ist an einem Gestell 202 der Thermoformanlage 100 angeordnet und über eine Verstelleinheit 220 orthogonal zur Vorschubrichtung der Folie 300 verlagerbar. Hierzu kann die Führung 210 zusätzlich verschiebbar am Gestell 202 angeordnet sein. Die Verstelleinheit 220 weist einen Linearantrieb auf. Über den Linearantrieb kann die Vorrichtung 200 nach der Überführung der Folie 300 aus einem Transportbereich 208 herausgefahren und an unterschiedliche Folienbreiten angepasst werden.

## Beschreibung

### Technisches Gebiet

Es werden eine Vorrichtung zur Überführung einer Materialbahn in einer Thermoformanlage, eine Thermoformanlage mit einem Formwerkzeug und einer Vorrichtung zur Überführung einer Materialbahn sowie ein Verfahren zum Überführen einer Materialbahn aus einem Formbereich einer Thermoformanlage beschrieben.

### Hintergrund

Bei Thermoformanlagen mit einem kippbaren Werkzeug wird ein kippbares Werkzeugteil zum Formen von Formteilen gegen ein stationäres Werkzeugteil gepresst und anschließend das kippbare Werkzeugteil relativ zum stationären Werkzeugteil bewegt und um eine im Wesentlichen orthogonal zur Vorschubrichtung der Materialbahn verlaufende Achse gekippt, wobei in der gekippten Position die geformten Formteile entnommen bzw. ausgebracht werden. Die Formteile werden beim Formen aus der Materialbahn gelöst und die Materialbahn mit ausgestanzten Bereichen, die auch als Restgitter oder Foliengitter bezeichnet wird, aus dem Formbereich herausgeführt. Üblicherweise ist bei solchen Thermoformanlagen eine Stapeleinheit vorgesehen, welche in Vorschubrichtung dem Formbereich nachgelagert ist. Zum Start der Thermoformanlage oder nach einem Formatwechsel, muss eine Materialbahn neu eingeführt werden, wobei in der Regel der Einzug über ein Transportsystem (bspw. Transportketten) über den Formbereich hinaus erfolgt. Dort verlässt die Materialbahn das Transportsystem und muss an der Stapeleinheit vorbeigeführt werden. Die vorbeigeführte Materialbahn kann dann bspw. einer Einrichtung zum Aufwickeln und/oder einer Mühle zugeführt werden. Bisher erfolgt das Vorbeiführen manuell durch einen Bediener, welcher den Anfang einer Materialbahn greifen und dann per Hand über die Stapeleinrichtung führen und von dort der Einrichtung zum Aufwickeln oder der Mühle zuführen muss. Hierzu ist es häufig erforderlich, dass der Bediener auf eine Leiter oder die Thermoformanlage steigt. Dabei besteht ein erhebliches Sicherheitsrisiko für den Bediener.

### Aufgabe

Demgegenüber besteht eine Aufgabe darin, eine sichere Überführung von Materialbahnen bei einem Start von Anlagen bereitzustellen. Zudem besteht eine Aufgabe darin, das Überführen von Materialbahnen zu vereinfachen und eine alternative Lösung zu der manuellen Überführung bereitzustellen.

### Lösung

Die vorstehend genannte Aufgabe wird durch eine Vorrichtung zur Überführung einer Materialbahn in einer Thermoformanlage mit einem Formwerkzeug aus einem Formbereich des Formwerkzeugs der Thermoformanlage zu einer nachgelagerten Station der Thermoformanlage gelöst, wobei das Formwerkzeug während eines Umformprozesses um eine quer zur Vorschubrichtung der Materialbahn verlaufende Achse kippbar ist, aufweisend eine Führung, die so ausgebildet ist, dass sich die Führung vom Formbereich bis zur nachgelagerten Station erstreckt, und eine Transporteinheit mit einem Transportmittel, das entlang der Führung zwischen Formstation und nachgelagerter Station verlagerbar und mit der Materialbahn in einem ersten der Formstation zugewandten Bereich in Eingriff bringbar und in einem zweiten der nachgelagerten Station zugewandten Bereich außer Eingriff bringbar ist.

Mittels der Vorrichtung kann damit eine Materialbahn insbesondere bei einem Start der Thermoformanlage, wenn eine neue Materialbahn eingebracht wird, überführt werden, ohne dass eine Bedienperson die Materialbahn aus dem Formbereich über weitere Stationen (z.B. Stapelstation) per Hand führen muss. Es kann lediglich erforderlich sein, dass eine Bedienperson den Anfang der Materialbahn nach Passieren des Formbereichs greift und in den ersten Bereich führt. Der Anfang der Materialbahn kommt dann in Eingriff mit dem Transportmittel und wird über das Transportmittel bewegt. Das Transportmittel kann kontinuierlich in Bewegung sein, zum Ineingriffbringen mit dem Anfang der Materialbahn im ersten Bereich in Bewegung versetzt werden oder erst nach dem Ineingriffbringen bewegt werden. Vorzugsweise kann der Anfang der Materialbahn automatisch mit dem Transportmittel in Eingriff gebracht werden. Nach dem Erreichen des zweiten Bereichs wird das Transportmittel außer Eingriff mit der Materialbahn gebracht. Dies kann vorzugsweise automatisch erfolgen, so dass die Materialbahn anschließend in der nachgelagerten Station automatisch aufgenommen oder von einer Bedienperson eingeführt bzw. in Eingriff gebracht wird. Die Überführung ist dann beendet und die Materialbahn kann in der nachgelagerten Station weiterverarbeitet werden. Bspw. kann die nachgelagerte Station eine Station zum Aufwickeln des Restgitters oder eine Station mit einer Mühle zum Zerkleinern des Restgitters sein. Der Vorschub des Restgitters wird dann von der nachgelagerten Station bewerkstelligt.

Es wird somit eine Überführung einer Materialbahn von einer Formstation zu einer nachgelagerten Station über mindestens eine weitere Station, bspw. Stapelstation, bereitgestellt, wobei Bedienpersonen nicht auf die Thermoformanlage klettern oder auf eine Leiter steigen müssen, so dass eine erheblich reduzierte Gefährdung für Leib und Leben vorliegt.

Eine Materialbahn wird nach dem Formen und Ausstanzen von Formteilen in einer Formstation auch als Rest- oder Foliengitter bezeichnet, wobei nachfolgend mit Materialbahn nach dem Formen ein solches Rest- oder Foliengitter gemeint ist. Die Begriffe werden daher synonym verwendet.

Eine solche Überführung eignet sich insbesondere bei sogenannten Kippmaschinen, wobei als Materialbahn eine Folie verarbeitet wird. Als Material hierfür können bspw. klassische Polymer Materialien bzw. Kunststoffe, sowie rezyklierbare Kunststoffe, wie rPET, biobasierte Materialien, wie PLA, oder andere gängige Kunststoffe zum Einsatz kommen. Darüber hinaus ist es auch möglich, die Überführung für Materialbahnen aus einem faserhaltigen Material zu verwenden.

In weiteren Ausführungen kann das Transportmittel mindestens ein Halteelement zum Ineingriffbringen aufweisen. Das Haltemittel dient dazu die Materialbahn bzw. das Restgitter, insbesondere den Anfang der Materialbahn zu greifen bzw. damit in Kontakt zu treten, so dass die Materialbahn zusammen mit dem mindestens einen Halteelement des Transportmittels bewegt bzw. gezogen werden kann.

In weiteren Ausführungen kann das Transportmittel endlos ausgebildet sein und nur ein Abschnitt des Transportmittels das mindestens eine Halteelement aufweisen. Ein endloses Transportmittel kann bspw. mindestens abschnittsweise als Kette, Gurt oder Riemen ausgeführt sein, wobei an einem Abschnitt das mindestens eine Halteelement angeordnet ist. Das Transportmittel kann über mindestens zwei Umlenkelemente (Lager, Rollen, Zahnräder, etc.) umgelenkt sein. Mindestens eines der Umlenkelemente kann dabei angetrieben sein oder es kann ein Antrieb vorgesehen sein, der an einer anderen Stelle als den Umlenkstellen, die sich vorzugsweise im ersten und zweiten Bereich befinden, das Transportmittel in Bewegung versetzt. Die Materialbahn kann über das mindestens eine Halteelement im ersten Bereich mit dem Transportmittel in Eingriff gebracht werden, wenn bspw. das mindestens eine Halteelement um eine Umlenkrolle in Richtung der Materialbahn bewegt werden. Das mindestens eine Halteelement gelangt dann zunehmend mit der Materialbahn in Kontakt bzw. Eingriff. Bei der weiteren Bewegung wird die Materialbahn mitgezogen. Im zweiten Bereich wird das mindestens eine Halteelement um eine weitere Umlenkrolle oder dergleichen umgelenkt und zurückgeführt, wobei das mindestens eine Halteelement dabei automatisch die Materialbahn freigibt.

In solchen Ausführungen kann die Führung bspw. so angeordnet sein, dass sie seitlich mit der Materialbahn in Eingriff gelangt. Das Transportmittel kann in der Führung geführt sein, wobei die Führung zusätzlich eine Führungsfläche aufweist, auf welcher ein seitlicher Abschnitt der Materialbahn aufliegt und über das mindestens eine Transportmittel mitgezogen wird.

In weiteren Ausführungen wird die Materialbahn so in die Führung eingebracht, dass ein seitlicher Abschnitt des Anfangs der Materialbahn auf der Führungsfläche der Führung aufliegt. Durch die Umlenkung des Transportmittels im ersten Bereich über ein Zahnrad, Umlenkrolle etc. kommt dann das mindestens eine Halteelement in Eingriff mit der Materialbahn bzw. dem Restgitter und drückt von oben den seitlichen Abschnitt gegen die Führungsfläche. Bei der weiteren Verlagerung des Transportmittels wird die Materialbahn entlang der Führungsfläche bewegt, wobei der restliche Teil der Materialbahn bzw. des Restgitters auf weiteren Führungsflächen oder Rollen aufliegt. In einer solchen Ausführung kann der Vorschub nur über den seitlichen Eingriff an der Materialbahn erfolgen. Die Führungsfläche endet im zweiten Bereich, so dass die Materialbahn nicht mehr von unten gehalten wird und schwerkraftbedingt vom mindestens einen Halteelement gelöst wird. Die Überführung ist dann beendet und das mindestens eine Transportelement wird über eine weitere Umlenkrolle oder dergleichen in den ersten Bereich zurückgeführt.

In weiteren Ausführungen kann das mindestens eine Halteelement eine Nadel und/oder ein Klemmelement aufweisen und/oder das Transportmittel mindestens abschnittsweise als Kette, Gurt oder Riemen ausgebildet sein. Eine Nadel ermöglicht ein einfaches Ineingriffbringen des Transportmittels mit dem Rand der Materialbahn bzw. des Restgitters.

In weiteren Ausführungen kann die Vorrichtung eine Verstelleinheit zur relativen Verlagerung des Transportmittels aufweisen. Die Verstelleinheit ermöglicht eine Verlagerung des Transportmittels und in weiteren Ausführungen zusätzlich der Führung, so dass das Transportmittel und die Führung nicht mehr in Kontakt mit der Materialbahn bzw. des Restgitters in Kontakt treten können. Die Materialbahn bzw. das Restgitter können auch nach dem Überführen weiterhin über Rollen oder dergleichen geführt werden, so dass die Materialbahn nicht durchhängt oder in eine weitere Station gelangt.

In weiteren Ausführungen kann das Transportmittel orthogonal zu einer Vorschubrichtung der Materialbahn durch die Anlage verlagerbar sein. Das Transportmittel wird dabei seitlich aus dem Transportbereich der Materialbahn gebracht. Zusätzlich kann die Führung aus dem Transportbereich gebracht werden, wobei dabei vorzugsweise das Transportmittel gemeinsam mit einem Antrieb dafür sowie der Führung verlagert wird. Die Vorrichtung zur Überführung wird dabei nur dann in den Transportbereich gebracht, wenn eine neue Materialbahn eingebracht wird. Anschließend wird die Vorrichtung verlagert.

In weiteren Ausführungen kann das Transportmittel relativ um eine orthogonal zu einer Vorschubrichtung der Materialbahn durch die Anlage verlaufende Achse verschwenkbar sein. Alternativ zu einer seitlichen Verlagerung wird die Vorrichtung in dieser Ausführung aus dem Transportbereich verschwenkt, wobei eine zusätzliche seitliche Verlagerung erfolgen kann, um die Führungsfläche der Führung von dem seitlichen Abschnitt der Materialbahn zu entfernen.

Die vorstehend genannte Aufgabe wird auch durch eine Thermoformanlage mit einem Formwerkzeug, das während eines Umformprozesses um eine quer zur Vorschubrichtung einer Materialbahn verlaufende Achse kippbar ist, und einer Vorrichtung zur Überführung der Materialbahn gemäß einer der vorstehend beschriebenen Ausführungen gelöst, wobei eine Materialbahn bzw. ein Restgitter aus einem Formbereich des Formwerkzeugs der Thermoformanlage zu einer nachgelagerten Station der Thermoformanlage überführt wird.

In weiteren Ausführungen kann zwischen der Formstation und der nachgelagerten Station mindestens eine weitere Station angeordnet sein und die Führung der Vorrichtung zur Überführung an der mindestens einen weiteren Station vorbeiführen.

In Bezug auf die Thermoformanlage wird auf die vorstehenden Vorteile verwiesen, die sich durch die Integration einer solchen Vorrichtung zur Überführung ergeben.

Die vorstehend genannte Aufgabe wird ferner durch ein Verfahren zum Überführen einer Materialbahn aus einem Formbereich einer Thermoformanlage mit einem Formwerkzeug und mit einer Vorrichtung zur Überführung der Materialbahn gelöst, wobei das Formwerkzeug während eines Umformprozesses um eine quer zur Vorschubrichtung der Materialbahn verlaufende Achse gekippt wird und wobei die Materialbahn aus einem Formbereich des Formwerkzeugs der Thermoformanlage zu einer nachgelagerten Station der Thermoformanlage transportiert wird,
wobei die Vorrichtung zur Überführung eine Transporteinheit mit einem Transportmittel aufweist, das über eine Führung zwischen Formstation und nachgelagerter Station in einer ersten Richtung verlagert und mit einem Anfangsbereich der Materialbahn in einem ersten der Formstation zugewandten Bereich in Eingriff gebracht wird und in einem zweiten der nachgelagerten Station zugewandten Bereich außer Eingriff gebracht wird.

In weiteren Ausführungen kann das Transportmittel in einer weiteren Richtung relativ zur Führung verlagert und/oder gestoppt werden, wenn die Materialbahn den zweiten Bereich passiert hat.

In weiteren Ausführungen kann bei der Verlagerung des Transportmittels in der ersten Richtung mindestens ein Haltemittel des Transportmittels automatisch mit der Materialbahn in Eingriff gebracht werden, wenn das mindestens eine Haltemittel den ersten Bereich passiert oder passiert hat und automatisch außer Eingriff gebracht werden, wenn das mindestens eine Haltemittel den zweiten Bereich passiert oder passiert hat.

In Bezug auf das Verfahren wird auf die vorstehenden Vorteile verwiesen, die in gleicher Weise gelten.

Weitere Merkmale, Ausgestaltungen und Vorteile ergeben sich aus der nachfolgenden Darstellung von Ausführungsbeispielen mit Bezug auf die Figuren.

### Kurzbeschreibung der Figuren

In den Zeichnungen zeigt:
- Fig. 1: eine schematische Darstellung von Stationen einer Thermoformanlage;
- Fig. 2: eine schematische Darstellung eines Formprozesses;
- Fig. 3: eine schematische Darstellung einer Vorrichtung zur Überführung einer Materialbahn;
- Fig. 4: eine weitere Darstellung der Vorrichtung aus Fig. 3;
- Fig. 5: eine noch weitere Darstellung der Vorrichtung aus Fig. 3;
- Fig. 6: eine vergrößerte Darstellung eines ersten Bereichs einer Vorrichtung zur Überführung einer Materialbahn;
- Fig. 7: eine weitere Darstellung eines ersten Bereichs; und
- Fig. 8: eine schematische Darstellung eines zweiten Bereichs einer Vorrichtung zur Überführung einer Materialbahn.

### Detaillierte Beschreibung von Ausführungsbeispielen

Nachfolgend werden mit Bezug auf die Figuren Ausführungsbeispiele der hierin beschriebenen technischen Lehre dargestellt. Für gleiche Komponenten, Teile und Abläufe werden in der Figurenbeschreibung gleiche Bezugszeichen verwendet. Für die hierin offenbarte technische Lehre unwesentliche oder für einen Fachmann sich erschließende Komponenten, Teile und Abläufe werden nicht explizit wiedergegeben. Im Singular angegebene Merkmale sind auch im Plural mitumfasst, sofern nicht explizit etwas anderes ausgeführt ist. Dies betrifft insbesondere Angaben wie "ein" oder "eine".

Im folgenden werden Ausführungen von Vorrichtungen 200 sowie Verfahren zum Überführen von Folien 300 mit Bezug auf die gezeigten Ausführungsbeispiele beschrieben.

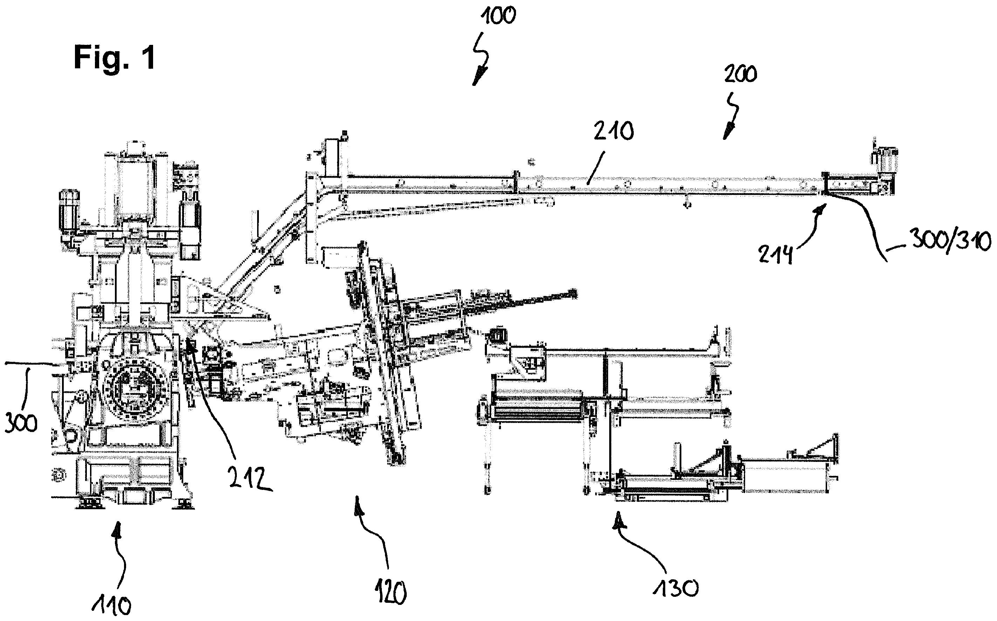

Fig. 1 zeigt eine schematische Darstellung von Stationen einer Thermoformanlage zum Umformen eines formbaren Materials, das in einem gezeigten Ausführungsbeispiel als endlose Materialbahn von einer Rolle zugeführt wird. Bei der Materialbahn kann es sich um eine Folie 300 aus einem Kunststoff handeln. Es können bspw. Kunststofffolien aus PET, PP, PS, PLA, PE verarbeitet werden.

Die Thermoformanlage 100 weist in der Regel eine Heizstation (nicht dargestellt), eine Formstation 110, eine Übergabe- und Stapelstation 120 und eine Transporteinheit 130 auf. Weiterhin kann die Thermoformanlage 100 weitere Stationen für eine Vorbehandlung und Bereitstellung einer Folie 300 sowie zum Weitertransport und/oder Weiterverarbeitung aufweisen, die in den gezeigten Ausführungsbeispielen nicht explizit beschrieben werden.

Die Thermoformanlage 100 weist zudem eine Vorrichtung 200 zur Überführung einer Materialbahn auf. Die Vorrichtung 200 ermöglicht es, die Folie 300 bzw. ein Restgitter 310 der Folie 300 nach dem Formen und Ausstanzen von Formteilen automatisch über zumindest die Übergabe- und Stapelstation 120 zu überführen, ohne dass eine Bedienperson die Folie 300 manuell über die Stationen führen und bspw. einer Station zum Aufwickeln oder einer Restgittermühle zuführen muss.

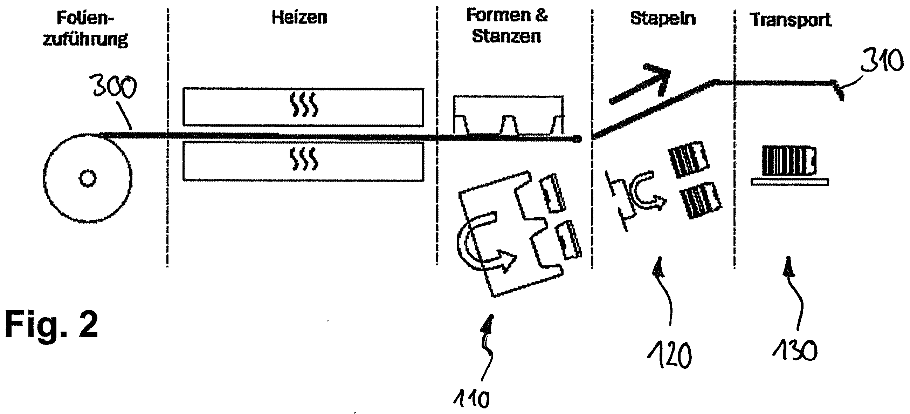

Fig. 2 zeigt eine schematische Darstellung eines Formprozesses in einer Thermoformanlage 100 bei der Herstellung von Formteilen in einem Thermoformprozess. Eine Folie 300 wird von einer Folienzuführung in die Thermoformanlage 100 eingebracht. Die Folie 300 wird in einer Heizstation vorgewärmt und gelangt dann in die Formstation 110. In der Formstation 110 wird die Folie 300 umgeformt und gestanzt. Die aus der Folie 300 geformten und gestanzten Formteile werden danach in einem Stapelkorb gestapelt, der Bestandteil einer Übergabe- und Stapelstation 120 ist. Aus dem Stapelkorb werden Stapel von Formteilen an eine Transporteinheit 130 übergeben, welche die gestapelten Formteile weiterverarbeitet. Bspw. können die Formteile stapelweise in Kartons verpackt werden.

Die Formstation 110 weist ein Formwerkzeug mit einem kippbaren Formwerkzeugteil und einem stationärem Formwerkzeugteil auf. Das kippbare Formwerkzeugteil wird zum Umformen gegen ein stationäres Formwerkzeugteil gepresst. Anschließend wird das kippbare Formwerkzeugteil relativ zum stationären Formwerkzeugteil bewegt und um eine im Wesentlichen orthogonal zur Vorschubrichtung der Folie 300 verlaufende Achse gekippt, wobei in der gekippten Position die geformten Formteile, welche in Kavitäten des Formwerkzeugteils aufgenommen sind, über eine weitere Einrichtung, wie bspw. einen sogenannten "Pflücker", in Aufnahmefächer des Stapelkorbs geschoben werden. Die Stapel werden danach der nachgelagerten Transporteinheit 130 übergeben.

In der Regel wird vor dem Start eines Umformprozesses eine Folie 300 durch die Stationen der Thermoformanlage 100 geführt. Dies erfolgt nach dem Einbringen in ein Transportsystem automatisch durch die Stationen, bis der Anfang der Folie 300 die Formstation 110 passiert hat. Der Anfang der Folie 300 befindet sich dann zwischen der Formstation 110 und der Übergabe- und Stapelstation 120. Es ist jedoch erforderlich, die Folie 300 über die Übergabe- und Stapelstation 120 und ggf. weitere Stationen zu führen und einer nachgelagerten Station zuzuführen. Im Stand der Technik wird dies dadurch gelöst, dass eine Bedienperson den Anfang der Folie 300 greift und manuell unter Zuhilfenahme einer Leiter oder durch ein Betreten der Thermoformanlage 100 die Folie 300 über die Stationen führt. Danach wird der Anfang der Folie 300 bspw. einer Station zum Aufwickeln zugeführt.

Die Vorrichtung 100 zur Überführung der Folie 300 bietet demgegenüber die Möglichkeit eine sichere und automatisierte Überführung eines Folienanfangs vor dem Start eines Thermoformprozesses bereitzustellen.

Die Vorrichtung 200 weist dazu eine Führung 210 und ein entlang der Führung 210 verlagerbares Transportmittel 230 auf, welches einen Folienanfang greifen und entlang der Führung 210 über weitere Stationen, wie bspw. die Übergabe- und Stapelstation 120, führen kann. Nach dem Passieren der Übergabe- und Stapelstation 120 wird der Folienanfang automatisch freigegeben und kann einer Restgittermühle oder einer Aufwickelstation zugeführt werden. Das Zuführen einer Restgittermühle oder einer Aufwickelstation kann manuell oder ebenfalls automatisch nach dem Freigeben des Folienanfangs erfolgen.

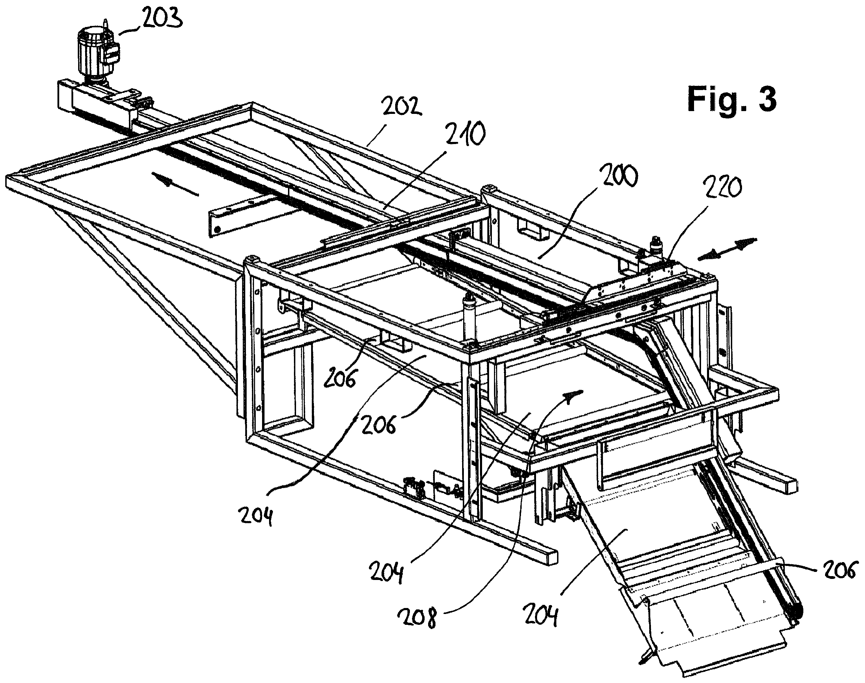

Fig. 3 zeigt eine schematische Darstellung einer Vorrichtung 200 zur Überführung einer Materialbahn bzw. einer Folie 300 in perspektivischer Ansicht. Die Vorrichtung 200 ist an einem Gestell 202 der Thermoformanlage 100 angeordnet und über eine Verstelleinheit 220 orthogonal zur Vorschubrichtung der Folie 300 verlagerbar. Hierzu kann die Führung 210 zusätzlich verschiebbar am Gestell 202 angeordnet sein. Die Verstelleinheit 220 weist einen Linearantrieb auf. Über den Linearantrieb kann die Vorrichtung 200 nach der Überführung der Folie 300 aus einem Transportbereich 208 herausgefahren und an unterschiedliche Folienbreiten angepasst werden. Da nach erfolgter Überführung der Folie 300 die Vorrichtung 200 nicht mehr benötigt wird, kann sie durch den Linearantrieb oder in weiteren Ausführungen durch eine andere Antriebeinrichtung seitlich nach außen verlagert werden, so dass die Folie 300 bzw. ein Restgitter 310 nicht mehr durch einen Führungsschlitz der Führung 210 geführt werden muss und frei über Rollen 206 geführt werden kann. Auf der anderen Seite können in einer Thermoformanlage 100 Folien 300 verschiedener Breite verarbeitet werden, so dass durch eine seitliche Verlagerung der Vorrichtung 200 eine Anpassung an die Folienbreite für eine Folienüberführung durch die Vorrichtung 200 möglich ist.

Wie in Fig. 3 gezeigt, sind an dem Gestell 202 im Transportbereich 208 der Folie 300 bzw. des Restgitters 310 Rollen 206 und Schutzbleche 204 angeordnet. Über die Rollen 206 wird das Restgitter 310 geführt und gegen ein Durchhängen nach unten, in den Bereich der Übergabe- und Stapelstation 120, gesichert. Die Schutzbleche 206 verhindern ebenfalls ein Durchhängen des Restgitters 310.

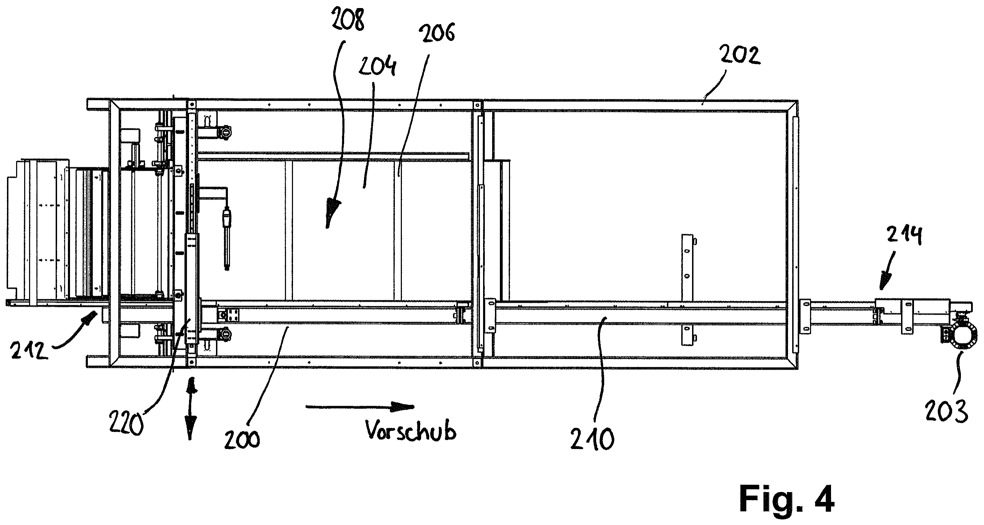

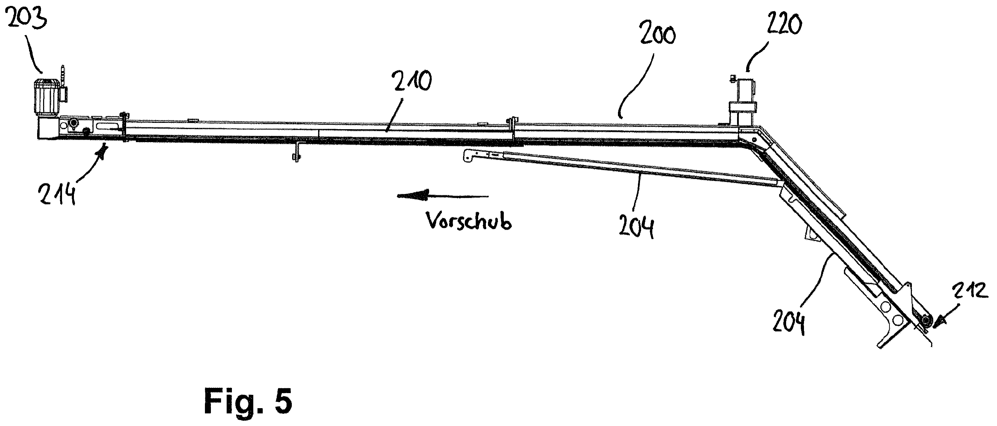

Die Führung 210 erstreckt sich von einem ersten Bereich 212 in unmittelbarer Nähe zur Formstation 110 bis zu einem zweiten Bereich 214 nach der Übergabe- und Stapelstation 120 (siehe Fig. 1). Fig. 4 zeigt eine weitere Darstellung der Vorrichtung 200 aus Fig. 3 von oben. Fig. 5 zeigt eine noch weitere Darstellung der Vorrichtung aus Fig. 3. Während der Überführung durch die Vorrichtung 200 wird die Folie 300 entlang der Führung 210 bewegt und kann dabei nicht so stark durchhängen, wie nach erfolgter Übergabe und Führung über die Rollen 206.

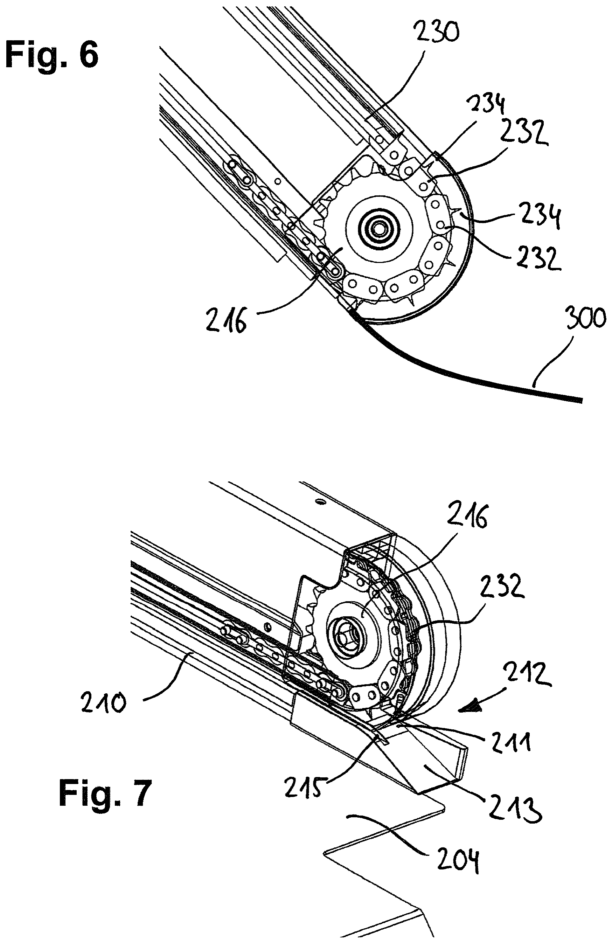

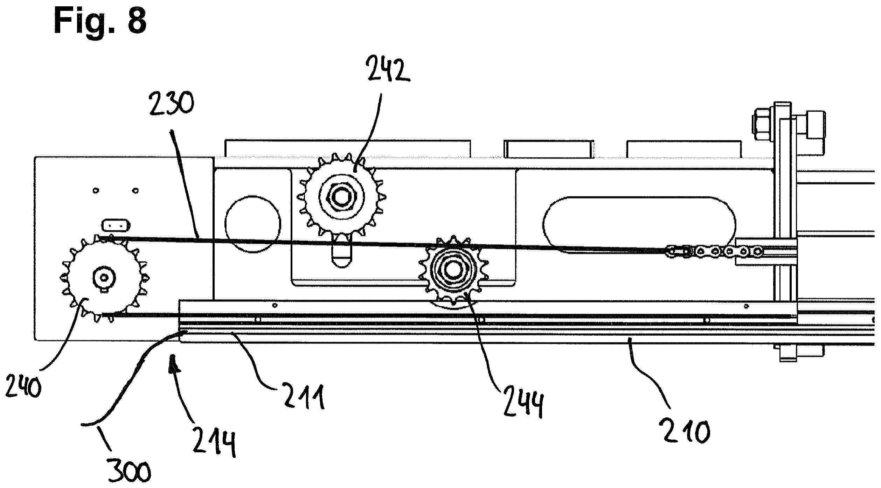

Fig. 6 zeigt eine vergrößerte Darstellung des ersten Bereichs 212 der Vorrichtung 200 zur Überführung der Folie 300 in einer schematischen Ansicht. Das Transportmittel 230 ist endlos ausgeführt und kann bspw. eine Kette, ein Riemen oder dergleichen sein. Im gezeigten Ausführungsbeispiel ist das Transportmittel 230 eine Kette. Die Kette wird über mindestens zwei Zahnräder 216und 240 (siehe Fig. 8) geführt. Hierzu ist ein Motor 203 vorgesehen, der das Zahnrad 240 antreibt. Ein Teil der Kettenglieder 232 der Kette weist Nadeln 234 auf. Dadurch wird der Folienanfang in Kontakt mit dem Transportmittel 230 gebracht und kann entlang der Führung 210 bewegt werden. Die Ausbildung der Kette mit nur bereichsweise vorgesehenen Nadeln 234 an einem Teil der Kettenglieder 232 weist den Vorteil auf, dass die Kette die Folie nach der Überführung im zweiten Bereich 214 automatisch wieder freigibt und keine Verbindung mehr zwischen dem Transportmittel 230 und der Folie 300 besteht. Es ist dabei ausreichend, wenn das Transportmittel 230 bzw. die Kette nur in einem verhältnismäßig kurzen Abschnitt Nadeln 234 aufweist. Ein solcher Abschnitt kann bspw. zwischen 1/10 und 1/100, vorzugsweise weniger als 1/100, der Länge der Führung 210 oder der gesamten Kettenlänge betragen. Wesentlich ist, dass das Transportmittel 230 den Folienanfang greifen und sicher entlang der Führung 210 transportieren kann. Aus diesem Grund ist es in weiteren Ausführungen ausreichend, wenn nur ein Halteelement (z.B. Nadel) vorgesehen ist.

Da die Vorrichtung 200 nach erfolgter Überführung der Folie 300 aus dem Transportbereich 208 heraus verlagert wird, kann der Antrieb der Kette nach erfolgter Überführung beendet werden. In weiteren Ausführungen wird die Kette nach der Überführung der Folie 300 solange weiter angetrieben, bis der Abschnitt mit den Nadeln 234 den ersten Bereich 212 erreicht hat. Vorzugsweise wird die Kette gestoppt, bevor die Nadeln 234 sich im ersten Bereich 212 befinden, so dass nach dem Start der Kette die Nadeln 234 erst in den Bereich 212 gelangen und die Folie 300 sicher greifen. Damit wird sichergestellt, dass die Nadeln 234 nicht den ersten Bereich 212 bereits passiert haben, bevor der Folienanfang in den ersten Bereich 212 eingebracht worden ist.

Das Antreiben der Kette nach erfolgter Überführung kann erfolgen, während die Vorrichtung 200 noch nicht seitlich über die Verstelleinheit 220 verlagert wurde, während der Verlagerung über die Verstelleinheit 220 oder erst nach erfolgter seitlicher Verlagerung durch die Verstelleinheit 220.

Fig. 7 zeigt eine weitere Darstellung des ersten Bereichs 212 in einer perspektivischen Ansicht. Die Führung 210 weist hier eine Rampe 213 auf. Die Rampe 213 erleichtert das Einbringen eines Folienanfangs der Folie 300. Die Zuführung des Folienanfangs kann bspw. durch eine Bedienperson erfolgen. Die Bedienperson greift dabei das Folienende, welches die Formstation 110 passiert hat, und führt es in den ersten Bereich 212. Die Rampe 213 erleichtert das Einbringen des Folienanfangs. In weiteren Ausführungen kann das Einbringen des Folienanfangs in den ersten Bereich 212 ohne zusätzliche Einwirkung einer Bedienperson erfolgen. In noch weiteren Ausführungen schließt der erste Bereich 212 direkt an einen Bereich der Formstation 110 an, aus dem die Folie 300 und im Betrieb der Thermoformanlage 100 das Restgitter 310 ausgebracht werden. Die Formstation 110 weist in der Regel selbst eine integrierte Folien- bzw. Restgitterführung auf. Vorteilhafterweise kann sich direkt an diese Folien- bzw. Restgitterführung die Führung 210 und der erste Bereich 212 anschließen, so dass eine Folie 300 aus der Folien- bzw. Restgitterführung automatisch und zwangsgeführt in den ersten Bereich 212 geführt wird. Hierzu kann die Vorrichtung 200 eine zusätzliche Führungshilfe aufweisen, die als Verbindungsstück zwischen der Folien- bzw. Restgitterführung und der Führung 210 ausgebildet ist. In solchen Ausführungen ist die Sicherheit für Bedienpersonal noch weiter erhöht, weil kein Eingreifen in den Bereich der Formstation 110 erforderlich ist.

Eine Führungsfläche 211 der Führung 210 beginnt in der gezeigten Ausführungsform bei der Rampe 213 und verläuft entlang der Führung 210 bis zum zweiten Bereich 214. Die Führungsfläche 211 weist eine Nut 215 für die Zähne 234 auf, die sich über die gesamte Länge der Führungsfläche 211 erstreckt. Beim Eingreifen der Zähne 234 in die Folie 300 durchdringen die Zähne 234 den Rand der Folie 300. Die Folie 300 wird dadurch zusammen mit den Zähnen 234 bei der Verlagerung der Kette bewegt. Die Zähne 234 tauchen in die Nut 215 ein, so dass die Folie 300 in Richtung der Kettenglieder 232 geschoben wird. Ein Abrutschen der Folie 300 wird dadurch verhindert.

Beim Transport der Folie 300 entlang der Führung 210 gleitet die Folie 300 auf der Führungsfläche 211. Die Führung 210 weist in dem gezeigten Ausführungsbeispiel eine Verkleidung für die Kette und eine seitliche Begrenzung für das seitliche Ende der Folie 300 auf. Es ist jedoch nicht erforderlich, die Folie 300 seitlich durch eine gesonderte Führung zu begrenzen, da die Folie 300 durch die Zähne 234 auch seitlich in Position gehalten werden kann. Nach Maßgabe der Eingriffspunkte, d.h. der Anzahl der Zähne bzw. Halteelemente und der Länge des Abschnitts mit Halteelementen, wird eine seitliche Ausgleichsbewegung der Folie 300 verhindert.

Fig. 8 zeigt eine schematische Darstellung des zweiten Bereichs 214 der Vorrichtung 200 zur Überführung der Folie 300. Es sind das angetriebene Zahnrad 240 und zwei Zahnräder 242, 244 zum Spannen der Kette dargestellt.

Wie in Fig. 8 gezeigt, endet die Führung 210 im zweiten Bereich 214, so dass die Folie 300 beim bzw. während des Erreichens des zweiten Bereichs 214 nicht mehr auf der Führungsfläche 211 aufliegt. Die Folie 300 fällt schwerkraftbedingt nach unten und gleitet aus den Nadeln 234, wobei die Überführung damit beendet ist. Die Folie 300 bzw. der Anfang der Folie 300 kann anschließend in eine Restgittermühle oder eine Aufwickelstation eingebracht werden. Die Folie 300 wird nicht mehr vom Transportmittel 230 bzw. der Kette mitgeführt, sobald alle Nadeln 234 bzw. Halteelemente nicht mehr in Eingriff mit der Folie 300 stehen.

Anschließend ist der Überführungsvorgang beendet und die Vorrichtung 200 kann seitlich aus dem Transportbereich 208 über die Verstelleinheit 220 verfahren werden. Zudem wird die Kette soweit verlagert, bis die Nadeln 234 wieder den ersten Bereich 212 erreicht haben, damit bei einem Formatwechsel und dem Einbringen einer neuer Folie 300 die Folie 300 wieder überführt werden kann, dass eine manuelle Überführung erfolgen muss.

### Bezugszeichenliste

- 100: Thermoformanlage
- 110: Formstation
- 120: Übergabe- und Stapelstation
- 130: Transporteinheit
- 200: Vorrichtung
- 202: Gestell
- 203: Motor
- 204: Schutzblech
- 206: Rolle
- 208: Transportbereich
- 210: Führung
- 211: Führungsfläche
- 212: erster Bereich
- 213: Rampe
- 214: zweiter Bereich
- 215: Nut
- 216: Zahnrad
- 220: Verstelleinheit
- 230: Transportmittel (Kette, Riemen, etc.)
- 232: Kettenglied
- 234: Nadel
- 240: Zahnrad
- 242: Zahnrad
- 244: Zahnrad
- 300: Folie
- 310: Restgitter

## Patentansprüche

1. Vorrichtung zur Überführung einer Materialbahn in einer Thermoformanlage mit einem Formwerkzeug, das während eines Umformprozesses um eine quer zur Vorschubrichtung der Materialbahn verlaufende Achse kippbar ist, aus einem Formbereich des Formwerkzeugs der Thermoformanlage zu einer nachgelagerten Station der Thermoformanlage, aufweisend eine Führung für die Materialbahn, die so ausgebildet ist, dass sich die Führung vom Formbereich bis zur nachgelagerten Station erstreckt, und eine Transporteinheit mit einem Transportmittel, das entlang der Führung zwischen Formstation und nachgelagerter Station verlagerbar und mit der Materialbahn in einem ersten der Formstation zugewandten Bereich in Eingriff bringbar und in einem zweiten der nachgelagerten Station zugewandten Bereich außer Eingriff bringbar ist.

2. Vorrichtung nach Anspruch 1, wobei das Transportmittel mindestens ein Halteelement zum Ineingriffbringen aufweist.

3. Vorrichtung nach Anspruch 2, wobei das Transportmittel endlos ausgebildet ist und nur ein Abschnitt des Transportmittels das mindestens eine Halteelement aufweist.

4. Vorrichtung nach Anspruch 2 oder 3, wobei das mindestens eine Halteelement eine Nadel und/oder ein Klemmelement aufweist und/oder das Transportmittel mindestens abschnittsweise als Kette, Gurt oder Riemen ausgebildet ist.

5. Vorrichtung nach einem der Ansprüche 1 bis 4, aufweisend eine Verstelleinheit zur relativen Verlagerung des Transportmittels.

6. Vorrichtung nach einem der Ansprüche 1 bis 5, wobei das Transportmittel orthogonal zu einer Vorschubrichtung der Materialbahn durch die Anlage verlagerbar ist.

7. Vorrichtung nach einem der Ansprüche 1 bis 6, wobei das Transportmittel relativ um eine orthogonal zu einer Vorschubrichtung der Materialbahn durch die Anlage verlaufende Achse verschwenkbar ist.

8. Thermoformanlage mit einem Formwerkzeug, das während eines Umformprozesses um eine quer zur Vorschubrichtung einer Materialbahn verlaufende Achse kippbar ist, und einer Vorrichtung zur Überführung der Materialbahn nach einem der Ansprüche 1 bis 7 aus einem Formbereich des Formwerkzeugs der Thermoformanlage zu einer nachgelagerten Station der Thermoformanlage.

9. Thermoformanlage nach Anspruch 8, wobei zwischen der Formstation und der nachgelagerten Station mindestens eine weitere Station angeordnet ist und die Führung der Vorrichtung zur Überführung an der mindestens einen weiteren Station vorbeiführt.

10. Verfahren zum Überführen einer Materialbahn aus einem Formbereich einer Thermoformanlage mit einem Formwerkzeug und mit einer Vorrichtung zur Überführung der Materialbahn, wobei das Formwerkzeug während eines Umformprozesses um eine quer zur Vorschubrichtung der Materialbahn verlaufende Achse gekippt wird und wobei die Materialbahn aus einem Formbereich des Formwerkzeugs der Thermoformanlage zu einer nachgelagerten Station der Thermoformanlage transportiert wird,
wobei die Vorrichtung zur Überführung eine Transporteinheit mit einem Transportmittel aufweist, das über eine Führung zwischen Formstation und nachgelagerter Station in einer ersten Richtung verlagert und mit einem Anfangsbereich der Materialbahn in einem ersten der Formstation zugewandten Bereich in Eingriff gebracht wird und in einem zweiten der nachgelagerten Station zugewandten Bereich außer Eingriff gebracht wird.

11. Verfahren nach Anspruch 10, wobei das Transportmittel in einer weiteren Richtung relativ zur Führung verlagert und/oder gestoppt wird, wenn die Materialbahn den zweiten Bereich passiert hat.

12. Verfahren nach Anspruch 10 oder 11, wobei bei der Verlagerung des Transportmittels in der ersten Richtung mindestens ein Haltemittel des Transportmittels automatisch mit der Materialbahn in Eingriff gebracht wird, wenn das mindestens eine Haltemittel den ersten Bereich passiert oder passiert hat und automatisch außer Eingriff gebracht wird, wenn das mindestens eine Haltemittel den zweiten Bereich passiert oder passiert hat.
